# EUROPEAN PATENT SPECIFICATION

(11) **EP 3 718 456 B1**
(45) Date of publication and mention of the grant of the patent: **03.09.2025**
(21) Application number: 20165443.1
(22) Date of filing: 25.03.2020
(51) Int. Cl.: A47L 15/42, D06F 39/08, G01F 1/075, G01F 1/115

(54) **DEVICE TO FEED A FLUID TO A HOUSEHOLD APPLIANCE**
VORRICHTUNG ZUM ZUFÜHREN EINES FLUIDS ZU EINEM HAUSHALTSGERÄT
DISPOSITIF D'ALIMENTATION DE FLUIDE POUR UN APPAREIL MÉNAGER

(30) Priority: 26.03.2019 IT 201900004387
(43) Date of publication of application: 07.10.2020
(73) Proprietor: Robertshaw Italy S.r.L., 24030 Terno d'Isola (BG) (IT)
(72) Inventor: Cattazzo, Donato, 20092 Cinisello Balsamo (IT); Rajaram, Madhavan, 20092 Cinisello Balsamo (IT); Corti, Paolo, 20874 Busnago (IT); Verzeroli, Marco, 24048 Treviolo (IT)
(74) Representative: Petraz, Gilberto Luigi

(56) References cited:
- EP-A1- 0 517 293
- EP-A2- 0 599 341
- EP-B1- 0 517 293
- WO-A1-2017/064591
- US-A- 4 181 018
- US-A1- 2007 289 647

## Description

### FIELD OF THE INVENTION

The present invention concerns a device to feed a fluid to a household appliance, for example to feed water to a washing machine, a dishwasher or suchlike.

### BACKGROUND OF THE INVENTION

It is known that there are devices to feed a fluid to a household appliance comprising one or more electro valves to adjust the flow of fluid entering from an inlet pipe and exiting from one or more outlet pipes. The one or more outlet pipes are disposed inside the household appliance and flexible connection tubes, or other, can be connected to them. A connection tube of a source that supplies the fluid, for example a normal water network, is normally connected to the inlet pipe.

In the inlet pipe for the fluid there can be positioned a flow meter, that is, a meter for the volumetric flow rate of fluid entering the feed device, comprising a turbine provided with magnetic means which cooperate with a magnetic sensor positioned on an electronic board of the feed device. The electronic circuit provided with a magnetic sensor is disposed in proximity to the flow meter so that when the turbine is made to rotate by the passage of the fluid in the inlet pipe, the magnetic sensor can detect the impulse generated by the magnetic means of the turbine whenever they transit in front of it.

The signal of the flow meter is used by the control circuit to determine the flow rate. The control circuit feeds the valve for the amount of time necessary to guarantee the required flow rate in order to meet the needs of the user and avoid wasting water, and to guarantee a correct functioning of the household appliance or other.

Document EP-A-0599341 for example discloses a device for the measuring and/or the volumetric control of a fluid. Document US-A-2007/289647 describes a mixer valve unit for liquids with an associated flow rate meter, particularly for electrical domestic appliances. Document EP-A-0517293 describes an integrated device for controlling the volume of fluids flowing through electrovalves for liquid distributing machines and washing machines. Document WO-A-2017/064591 describes a valve assembly with an associated measurement device.

One disadvantage of the known feed devices is that the quantity of water delivered through the outlet pipe or pipes is often not very precise and accurate, which can for example lead to waste of water or incorrect functioning of the household appliance, and this lack of precision and accuracy is mainly due to imprecise and inaccurate measurements by the magnetic sensor, which receives an imprecise or compromised signal from the electromagnetic means positioned on the turbine.

One of the causes that determine a low precision in the signal detected by the magnetic sensor of the known feed devices is that, when the rotation speed of the turbine increases, the duration of the pulse detected by the magnetic sensor is too short to be correctly processed by the electronic board of the feed device, while a longer lasting signal would be necessary, for example longer than 2 ms.

Known solutions which, however, prove to be ineffective and increase the complexity and also the sizes of the known feed devices, provide to supply another signal processing circuit associated with the electronic board on which the magnetic sensor is mounted, so as to substantially increase the signal duration, for example to more than 2 ms.

Known devices to feed a fluid to a household appliance therefore prove to not be very precise and reliable, and have rather significant sizes considering the purposes for which they are designed, that is, to supply precise flow rates of fluid to a household appliance.

There is therefore the need to perfect a device to feed a flow of fluid to a household appliance that can overcome at least one of the disadvantages of the state of the art.

In particular, one purpose of the present invention is to provide a device to feed fluid in which the detected signal is precise and reliable, so that a precise quantity of fluid is delivered through the outlet pipe or pipes of the feed device.

Another purpose of the present invention is to provide a device to feed a fluid to a household appliance that allows the magnetic sensor to detect a precise signal of suitable length without using other signal processing circuits to be associated with the electronic board.

Another purpose of the present invention is to provide a device to feed a flow of fluid to a household appliance which is compact and therefore of limited sizes.

Another purpose of the present invention is to provide a device to feed a flow of fluid that is reliable, precise and can be used in any household appliance that requires a fluid to be fed to it, therefore a washing machine, a dishwasher or other.

The Applicant has devised, tested and embodied the present invention to overcome the shortcomings of the state of the art and to obtain these and other purposes and advantages.

### SUMMARY OF THE INVENTION

The present invention is set forth and characterized in the independent claim.

The dependent claims describe other characteristics of the present invention or variants to the main inventive idea.

In accordance with the above purposes, a device to feed a fluid to a household appliance comprises:
a main body provided with at least one inlet pipe for the fluid and at least one outlet pipe for the fluid;
at least one electro valve to adjust the flow rate of fluid exiting from the outlet pipe;
at least one flow meter provided with a turbine bearing one or more magnetic elements and positioned in the inlet pipe;
and at least one electronic circuit provided with at least one magnetic sensor positioned in proximity to the flow meter and able to detect the passage of the one or more magnetic elements when the turbine is made to rotate by the passage of the fluid in the inlet pipe.

According to a characteristic aspect of the invention, the one or more magnetic elements are cylindrical, or parallelepiped, prismatic or similar shape, and housed in one or more seatings made in the turbine in an offset position with respect to an axis of rotation of the turbine.

The magnetic sensor which the electronic circuit is provided with is directed along an axis inclined toward the turbine of the flow meter. The axis of the magnetic sensor is also inclined with respect to a longitudinal axis of the magnetic element when the magnetic element transits in front of the magnetic sensor.

Advantageously, the configuration and positioning as above of the magnetic elements in suitable seatings made in the turbine in an offset position with respect to the axis of rotation of the turbine, allows to obtain a device to feed a fluid in which the detected signal is precise and reliable, so that a precise quantity of fluid is delivered through the outlet pipe or pipes of the feed device.

Furthermore, in this way, in the present device to feed a fluid to a household appliance the magnetic sensor advantageously detects a precise signal of suitable length when a magnetic element transits in front of it, without using other signal processing circuits to be associated with the electronic board.

In some embodiments, the magnetic element can comprise a longitudinal axis which is substantially directed in a direction tangent to the direction of rotation of the turbine.

The magnetic element can also comprise a longitudinal axis which is orthogonal to the axis of rotation of the turbine.

The one or more housing seatings of a magnetic element can be recessed in the blades of the turbine and therefore configured to house a corresponding magnetic element substantially retracted therein.

The turbine can comprise at least two seatings diametrically opposite the axis of rotation and in each of the seatings a magnetic element is housed.

Ridges to retain the magnetic element in position can be made in the one or more seatings.

In some embodiments, the one or more seatings can have an aperture to insert the magnetic element facing toward an outlet end of the fluid from the inlet pipe.

According to other aspects of the invention, the magnetic element can be cylindrical in shape and the ratio between its diameter and its length is comprised between about 0.5 and about 0.9 and preferably equal to about 0.7.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional view of a device to feed a fluid to a household appliance according to the present invention;
- fig. 2 is a three-dimensional view of a part of the present feed device of fig. 1;
- fig. 3 is an exploded view of a flow meter of the present feed device;
- fig. 4 is a three-dimensional view of a turbine of the flow meter of fig. 3;
- fig. 5 is a schematic view that shows the reciprocal positioning of the flow meter and of a magnetic sensor positioned on an electronic circuit of the present feed device;
- fig. 6 is a three-dimensional view of a support for the electronic circuit of the present feed device;
- fig. 7 is a three-dimensional view of a magnetic shielding element, for example made of metallic material or suchlike.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants.

Before describing these embodiments, we must also clarify that the present description is not limited in its application to details of the construction and disposition of the components as described in the following description using the attached drawings. The present description can provide other embodiments and can be obtained or executed in various other ways. We must also clarify that the phraseology and terminology used here is for the purposes of description only, and cannot be considered as limitative.

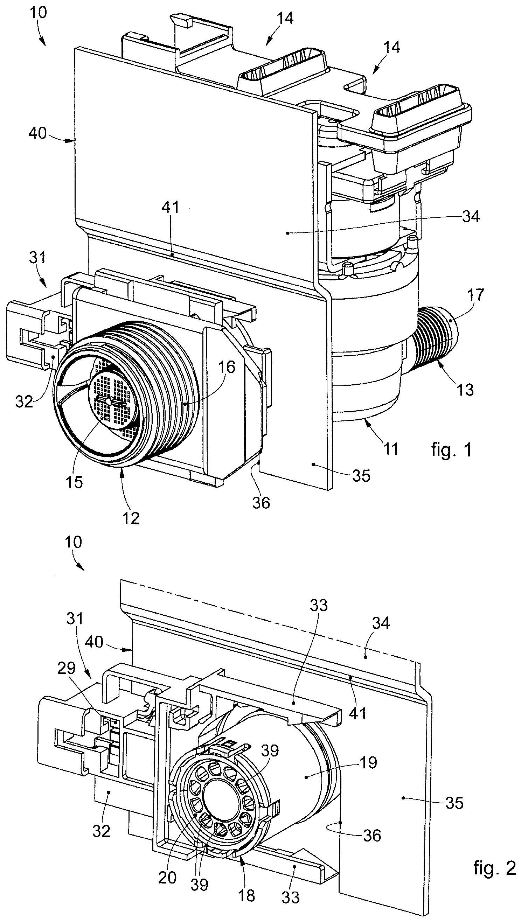

With reference to the attached drawings, and in particular to fig. **1****,** a device 10 to feed a fluid according to the invention comprises a main body **11** provided with at least one inlet pipe 12, able to receive a fluid from an external source, and at least one outlet pipe 13, able to supply the fluid to a household appliance, such as a washing machine, a dishwasher or suchlike.

In the example shown by way of a non-limiting example, the feed device 10 comprises two outlet pipes 13, one of which is visible in fig. 1. The flow of fluid from the outlet pipes 13 and therefore the flow rate of fluid exiting the feed device 10 are adjusted by electro valves 14, one for each of the outlet pipes 13. If only one outlet pipe 13 is provided, naturally a single electro valve 14 will be provided.

The inlet pipe 12 is provided with at least one filter 15 to retain possible impurities of the fluid entering the feed device 10 and can be provided with a threaded external surface 16, so that it can be connected to a tube of an external source that feeds the fluid, for example a normal water network. The outlet pipe 13 comprises an external surface 17 suitable to be connected with an internal tube to the household appliance, for example a threaded surface.

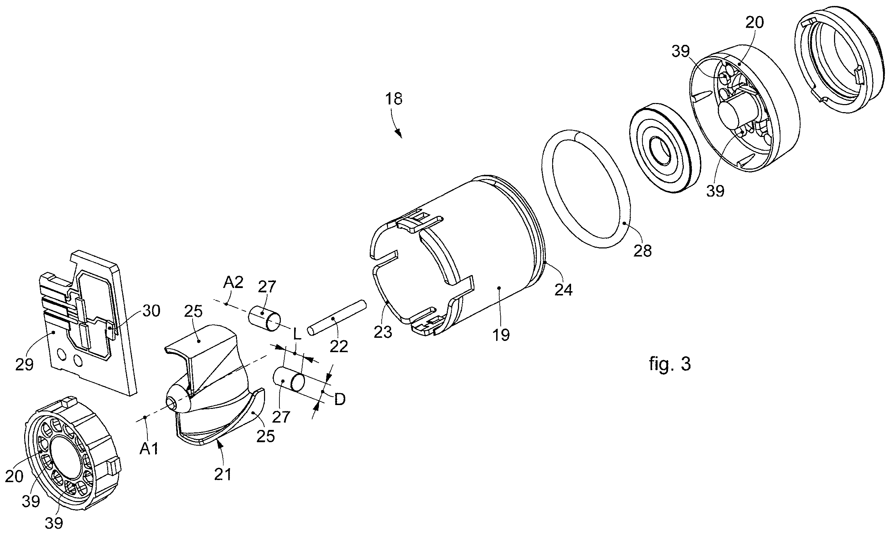

In the inlet pipe 12, see also fig. 2 and fig. 3, there is positioned a flow meter 18, in particular a volumetric flow meter.

The flow meter 18 is housed inside a tubular element 19, for example with a cylindrical shape, which comprises an inlet end 23 for the fluid and an outlet end 24 for the fluid.

In correspondence with each of these ends 23 and 24, the tubular element 19 is provided with a disk 20 that has a series of holes 39 for the passage of the fluid.

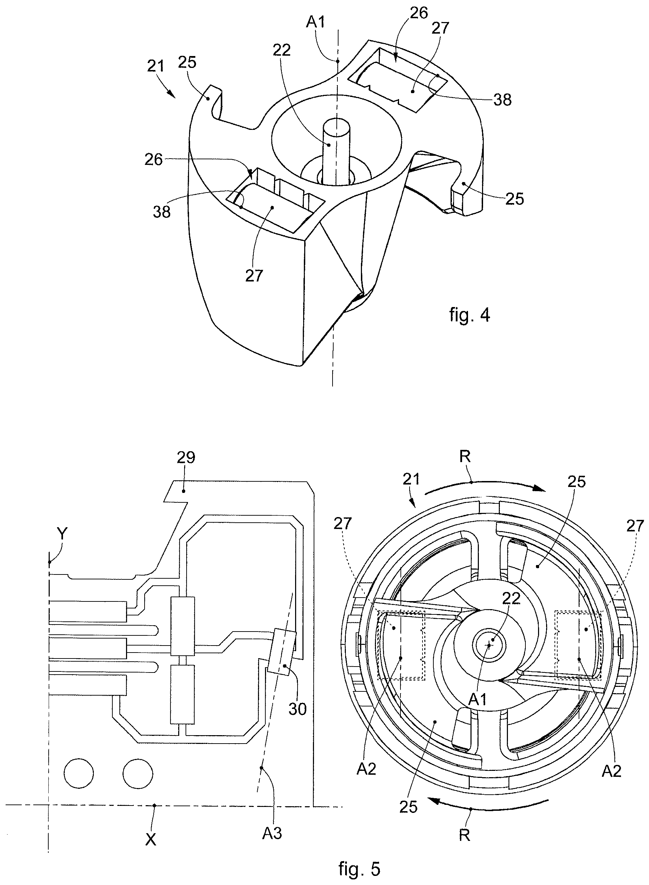

The flow meter 18 comprises a turbine 21, see also fig. 4 and fig. 5, provided with a shaft 22 around which it can rotate, for example in the direction R and around an axis of rotation A1, thanks to the flow that passes through the tubular element 19.

The turbine 21 comprises a series of blades 25, for example a pair of blades 25 made substantially on diametrically opposite positions with respect to the axis of rotation A1.

The turbine 21 comprises, in a radial direction and therefore offset with respect to the axis of rotation A1, one or more housing seatings 26 for a magnetic element 27.

In the seating 26, ridges 37 can be made to retain the corresponding magnetic element 27 in position.

The housing seating 26 for the magnetic element 27 has an aperture 38 to insert the magnetic element 27 facing toward the outlet end 24 of the fluid from the inlet pipe 12.

In the example shown, the turbine 21 comprises two seatings 26 diametrically opposite the axis of rotation A1 and in each of which a magnetic element 27 is housed.

As can be seen, in each blade 25 there is made a housing seating 26 for a magnetic element 27, which is therefore advantageously recessed or inserted retracted in the seating 26.

The magnetic element 27 is substantially of a cylindrical, prismatic, parallelepiped or similar shape. By way of example, the drawings show a cylindrical magnetic element 27.

In the cylindrical magnetic element 27 the ratio between the diameter D and the length L is comprised between 0.5 and 0.9 and preferably equal to about 0.7.

The magnetic element 27 comprises a longitudinal axis A2 which is substantially directed in a direction tangent to the direction of rotation R of the turbine 21.

The longitudinal axis A2 of the magnetic element 27 is also preferably orthogonal to the axis of rotation A1 of the turbine 21.

The flow meter 18 also comprises hydraulic seal gaskets, see for example the gasket 28.

An electronic circuit 29 is positioned in proximity to the turbine 21 and is provided with a magnetic sensor 30.

The magnetic sensor 30, see in particular fig. 5, is inclined toward the turbine 21 and therefore toward the magnetic element 27 which on each occasion is presented in front of it. Substantially, therefore, the magnetic sensor 30 is directed along an axis A3 inclined with respect to the longitudinal axis A2 of the magnetic element, when the latter is presented in front of the magnetic sensor 30, as shown schematically in fig. 5.

The axis A3 of the magnetic sensor 30 is also inclined with respect to two axes X and Y, orthogonal to each other, of the electronic circuit 29.

It has been proven through experiments that providing a magnetic sensor 30 inclined toward the turbine 21, and therefore toward the magnetic element 27, allows to obtain an extremely defined pulse or signal with a suitable length, for example greater than about 2 ms, whenever the magnetic element 27 transits in front of the magnetic sensor 30, without the need to provide additional signal processing circuits. The electronic circuit 29 of the present feed device 10 is in fact extremely compact.

It has also been proven through experiments that a magnetic element 27 with a cylindrical or parallelepiped, prismatic or similar shape, housed in a seating 26 positioned in a radial direction and therefore offset with respect to the axis of rotation A1 of the turbine 21, guarantees a clean and prolonged signal, without the need for additional signal processing circuits.

It has also been proven through experiments that a cylindrical magnetic element 27 in which the diameter D and the width L is comprised between 0.5 and 0.9 and preferably equal to about 0.7, allows to further perfect the present feed device 10 and therefore to obtain a clean and prolonged signal, without the need for additional signal processing circuits.

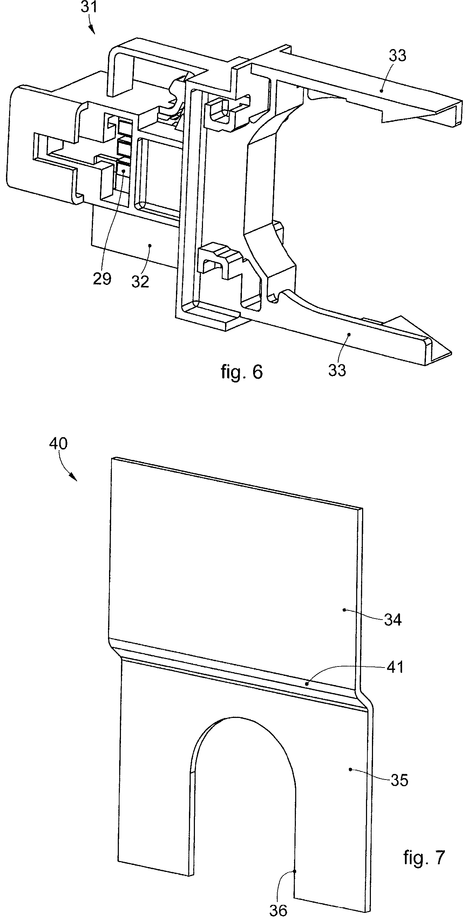

The electronic circuit 29 is housed in a support 31, see fig. 6, which comprises a housing body 32 where a seating for inserting the electronic circuit 29 is made. Two arms 33 extend from the housing body 32, which position themselves on one side and on the other of the inlet pipe 12 of the present feed device 10.

The support 31 is preferably made of metallic or similar material and therefore it is configured as a magnetic shielding element, therefore able to protect the magnetic sensor 30 and the one or more magnetic elements 27 of the flow meter 18 from the influence of magnetic fields produced by the windings of one or more electro valves 14.

The present feed device 10 can be provided with other magnetic shielding elements, in particular a shielding wall 40, see fig. 7, which is positioned between the flow meter 18 that cooperates with the magnetic sensor 30 and the one or more electro valves 14. The shielding wall 40 is made of metallic or similar material.

The shielding wall 40 can comprise an upper plate 34 able to be positioned between the electro valves 14 and the inlet pipe 12 where the flow meter 18 is housed.

The upper plate 34 is preferably of a substantially square or rectangular shape.

The shielding wall 40 also comprises a lower plate 35 in which an aperture 36 is made, by means of which the shielding wall 40 can be suitably positioned around the inlet pipe 12.

The shielding wall 40, in particular, is positioned between the support 31 and the one or more electro valves 14. This positioning proves to be extremely useful and effective as an additional protection, even if the support 31 is itself configured as a shielding element, as mentioned above.

The shielding wall 40, in order to be positioned with even greater precision and efficiency in the present drive device, can be made substantially S-shaped, that is, with the upper plate 34 and the lower plate 35 lying on different planes, as can be seen in fig. 7, and joined by means of a connection segment 36.

It is clear that modifications and/or additions of parts may be made to the device to feed a fluid to a household appliance as described heretofore, without departing from the field and scope of the present invention.

It is also clear that, although the present invention has been described with reference to some specific examples, a person of skill in the art shall certainly be able to achieve many other equivalent forms of device to feed a fluid to a household appliance, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Device to feed a fluid to a household appliance, comprising:
a main body (11) provided with at least one inlet pipe (12) for the fluid and at least one outlet pipe (13) for the fluid;
at least one electro valve (14) to adjust the flow rate of fluid exiting from said outlet pipe (13);
at least one flow meter (18) provided with a turbine (21) bearing one or more magnetic elements (27) and positioned in said inlet pipe (12);
and at least one electronic circuit (29) provided with at least one magnetic sensor (30) positioned in proximity to said flow meter (18) and able to detect the passage of said one or more magnetic elements (27) when the turbine (21) is made to rotate by the passage of the fluid in said inlet pipe (12),
wherein said one or more magnetic elements (27) are cylindrical, or parallelepiped, prismatic or similar shape, and housed in one or more seatings (26) made in said turbine (21) in an offset position with respect to an axis of rotation (A1) of the turbine (21),
**characterized in that** said magnetic sensor (30), which the electronic circuit (29) is provided with, is directed along an axis (A3) inclined toward the turbine (21) of the flow meter (18) and also inclined with respect to a longitudinal axis (A2) of the magnetic element (27) when said magnetic element (27) transits in front of said magnetic sensor (30).

2. Feed device as in claim 1, **characterized in that** the magnetic element (27) comprises a longitudinal axis (A2) that is substantially directed in a direction tangent to the direction of rotation (R) of the turbine (21).

3. Feed device as in claim 1, **characterized in that** the magnetic element (27) comprises a longitudinal axis (A2) that is orthogonal to the axis of rotation (A1) of the turbine (21).

4. Feed device as in claim 1, **characterized in that** said one or more housing seatings (26) for a magnetic element (27) are recessed in one or more blades (25) of the turbine (21) and therefore configured to house a corresponding magnetic element (27) substantially retracted therein.

5. Feed device as in claim 1, **characterized in that** said turbine (21) comprises at least two seatings (26) diametrically opposite said axis of rotation (A1) and in each of said seatings (26) a magnetic element is housed (27).

6. Feed device as in claim 1, **characterized in that** ridges (37) to retain the magnetic element (27) in position are made in said one or more seatings (26).

7. Feed device as in claim 1, **characterized in that** said one or more seatings (26) have an aperture (38) to insert the magnetic element (27) facing toward an outlet end (24) of the fluid from the inlet pipe (12).

8. Feed device as in claim 1, **characterized in that** said magnetic element (27) is cylindrical in shape and the ratio between its diameter (D) and its length (L) is comprised between about 0.5 and about 0.9 and preferably equal to about 0.7.

## Patentansprüche

1. Vorrichtung zum Zuführen eines Fluids zu einem Haushaltsgerät, die aufweist:
einen Hauptkörper (11), der mit mindestens einer Einlassröhre (12) für das Fluid und mindestens einer Auslassröhre (13) für das Fluid versehen ist;
mindestens ein Elektroventil (14) zum Anpassen der Strömungsrate eines Fluids, das die Auslassröhre (13) verlässt;
mindestens einen Strömungsmesser (18), der mit einer Turbine (21) versehen ist, die ein oder mehrere magnetische/s Element/e (27) trägt, und in der Einlassröhre (12) positioniert ist;
und mindestens eine Elektronikschaltung (29), die mit mindestens einem Magnetsensor (30) versehen ist, der/die in der Nähe des Strömungsmessers (18) positioniert ist/sind und dazu fähig ist/sind, das Passieren des einen oder der mehreren magnetischen Elements/e (27) zu erfassen, wenn die Turbine (21) durch das Passieren des Fluids in der Einlassröhre (12) zum Drehen gebracht wird,
wobei das eine oder die mehreren magnetische/n Element/e (27) eine zylindrische oder Parallelepiped-, Prisma- oder ähnliche Form haben und in einem oder mehreren Sitz/en (26) eingehaust sind, der/die in der Turbine (21) bei einer Versatzposition bezüglich einer Drehachse (A1) der Turbine (21) gefertigt ist/sind,
**dadurch gekennzeichnet, dass** der Magnetsensor (30), mit dem die Elektronikschaltung (29) versehen ist, entlang einer Achse (A3) gerichtet ist, die in Richtung der Turbine (21) des Strömungsmessers (18) geneigt ist und auch bezüglich einer Längsachse (A2) des magnetischen Elements (27) geneigt ist, wenn das magnetische Element (27) vor dem Magnetsensor (30) quert.

2. Zuführvorrichtung nach Anspruch 1, **dadurch gekennzeichnet, dass** das magnetische Element (27) eine Längsachse (A2) aufweist, die im Wesentlichen in eine Richtung gerichtet ist, die zu der Richtung einer Drehung (R) der Turbine (21) tangential ist.

3. Zuführvorrichtung nach Anspruch 1, **dadurch gekennzeichnet, dass** das magnetische Element (27) eine Längsachse (A2) aufweist, die zu der Drehachse (A1) der Turbine (21) orthogonal ist.

4. Zuführvorrichtung nach Anspruch 1, **dadurch gekennzeichnet, dass** ein oder mehrere Einhausungssitz/e (26) für ein magnetisches Element (27) in einem oder mehreren Flügel/n (25) der Turbine (21) vertieft ist/sind und daher dazu gestaltet ist/sind, ein korrespondierendes magnetisches Element (27) einzuhausen, das im Wesentlichen darin zurückgezogen ist.

5. Zuführvorrichtung nach Anspruch 1, **dadurch gekennzeichnet, dass** die Turbine (21) mindestens zwei Sitze (26) aufweist, die diametral zu der Drehachse (A1) entgegengesetzt sind und in jedem der Sitze (26) ein magnetisches Element (27) eingehaust ist.

6. Zuführvorrichtung nach Anspruch 1, **dadurch gekennzeichnet, dass** Erhöhungen (37) zum In-Position-Halten des magnetischen Elements (27) in dem einen oder den mehreren Sitz/en (26) gefertigt sind.

7. Zuführvorrichtung nach Anspruch 1, **dadurch gekennzeichnet, dass** ein oder mehrere Sitz/e (26) eine Öffnung (38) zum Einsetzen des magnetischen Elements (27) hat/haben, die in Richtung eines Auslassendes (24) des Fluids von der Einlassröhre (12) zeigt.

8. Zuführvorrichtung nach Anspruch 1, **dadurch gekennzeichnet, dass** das magnetische Element (27) eine zylindrische Form hat und das Verhältnis zwischen seinem Durchmesser (D) und seiner Länge (L) zwischen etwa 0.5 und etwa 0.9 enthalten und vorzugsweise gleich wie etwa 0.7 ist.

## Revendications

1. Dispositif d'alimentation en fluide d'un appareil électroménager, comprenant :
un corps principal (11) pourvu d'au moins un tuyau d'entrée (12) pour le fluide et d'au moins un tuyau de sortie (13) pour le fluide ;
au moins une électrovanne (14) pour régler le débit de fluide sortant dudit tuyau de sortie (13) ;
au moins un débitmètre (18) muni d'une turbine (21) portant un ou plusieurs éléments magnétiques (27) et positionné dans ledit tuyau d'entrée (12) ;
et au moins un circuit électronique (29) pourvu d'au moins un capteur magnétique (30) positionné à proximité dudit débitmètre (18) et pouvant détecter le passage dudit un ou plusieurs éléments magnétiques (27) lorsque la turbine (21) est mise en rotation par le passage du fluide dans ledit tuyau d'entrée (12),
dans lequel lesdits un ou plusieurs éléments magnétiques (27) sont de forme cylindrique, ou parallélépipédique, prismatique ou similaire, et logés dans un ou plusieurs sièges (26) réalisés dans ladite turbine (21) dans une position décalée par rapport à un axe de rotation (A1) de la turbine (21),
**caractérisé en ce que** ledit capteur magnétique (30), dont le circuit électronique (29) est pourvu, est dirigé le long d'un axe (A3) incliné vers la turbine (21) du débitmètre (18) et également incliné par rapport à un axe longitudinal (A2) de l'élément magnétique (27) lorsque ledit élément magnétique (27) passe devant ledit capteur magnétique (30).

2. Dispositif d' alimentation selon la revendication 1, **caractérisé en ce que** l'élément magnétique (27) comprend un axe longitudinal (A2) qui est sensiblement dirigé dans une direction tangentielle au sens de rotation (R) de la turbine (21).

3. Dispositif d' alimentation selon la revendication 1, **caractérisé en ce que** l'élément magnétique (27) comprend un axe longitudinal (A2) qui est orthogonal à l'axe de rotation (A1) de la turbine (21).

4. Dispositif d'alimentation selon la revendication 1, **caractérisé en ce que** lesdits un ou plusieurs sièges de logement (26) pour un élément magnétique (27) sont en retrait dans une ou plusieurs aubes (25) de la turbine (21) et sont donc configurés pour loger un élément magnétique correspondant (27) sensiblement rétracté dans celui-ci.

5. Dispositif d'alimentation selon la revendication 1, **caractérisé en ce que** ladite turbine (21) comprend au moins deux sièges (26) diamétralement opposés audit axe de rotation (A1) et dans chacun desdits sièges (26) est logé un élément magnétique (27).

6. Dispositif d'alimentation selon la revendication 1, **caractérisé en ce que** des nervures (37) pour retenir l'élément magnétique (27) en position sont réalisées dans lesdits un ou plusieurs sièges (26).

7. Dispositif d'alimentation selon la revendication 1, **caractérisé en ce que** lesdits un ou plusieurs sièges (26) ont une ouverture (38) pour insérer l'élément magnétique (27) tourné vers une extrémité de sortie (24) du fluide à partir du tuyau d'entrée (12).

8. Dispositif d'alimentation selon la revendication 1, **caractérisé en ce que** ledit élément magnétique (27) est de forme cylindrique et le rapport entre son diamètre (D) et sa longueur (L) est compris entre environ 0.5 et environ 0.9 et de préférence égal à environ 0.7.
